# DEMANDE DE BREVET EUROPEEN

(11) **EP 1 118 502 A1**
(43) Date de publication de la demande: **25.07.2001**
(21) Numéro de dépôt: 01400065.7
(22) Date de dépôt: 11.01.2001
(51) Int. Cl.: B60Q 3/02

(54) **Dispositif d'éclairage ultra-violet et son application à un cockpit d'aéronef**

(30) Priorité: 21.01.2000 FR 0000761
(71) Demandeur: VIBRACHOC, F-91028 Evry Cédex (FR)
(72) Inventeur: Bardy, Bernard, 94440 Villecresnes (FR)
(74) Mandataire: Jacquard, Philippe Jean-Luc

(57) **Abrégé**

L'invention concerne un dispositif d'éclairage ultra-violet d'une zone (22) dont au moins une région présente un marquage fluorescent (21), caractérisé en ce qu'il comporte une pluralité de diodes électro-luminescentes (D1,D2,...,DN) émettant dans l'ultra-violet proche et au moins un élément optique (10) assurant une dispersion de la lumière émise par les diodes (D1,D2,...,DN) pour assurer un éclairage de ladite zone (22).

## Description

La présente invention a pour objet un dispositif d'éclairage ultra-violet et son application à un cockpit d'aéronef.

On connaît déjà des dispositifs d'éclairage ultra-violet de marquages fluorescents qui sont disposés notamment sur les panneaux d'instruments de cockpits d'aéronefs, en particulier d'hélicoptères. Pour un cockpit d'hélicoptère, on compte environ une dizaine de dispositifs dont chacun est affecté à une zone à éclairer.

L'éclairage en lumière ultra-violette d'une peinture fluorescente par exemple jaune Saturne, jaune arc, orange feu, vert et/ou bleu, permet une bonne lisibilité des marquages par le pilote lorsqu'il porte un casque de vision nocturne équipé de jumelles à intensification de lumière, sans que l'éclairage ultra-violet ni le rayonnement visible réémis par les peintures n'excite la sensibilité des jumelles.

Les solutions actuellement connues impliquent la mise en oeuvre de tubes fluorescents ultra-violets, ce qui présente de nombreux inconvénients, à savoir :
- fragilité mécanique des tubes fluorescents,
- durée de vie limitée de ces tubes,
- sensibilité aux pannes, puisqu'en général, une zone donnée d'un panneau d'instruments n'est éclairée que par un seul tube,
- nécessité de disposer, dans chaque boîtier, un convertisseur pour alimenter en haute tension les tubes fluorescents, ce qui complique beaucoup l'électronique de projection,
- nécessité de disposer d'un verre de Wood pour couper les composantes visibles du spectre qui sont émises et qui excitent la sensibilité des jumelles,
- nécessité de disposer d'un filtre infra-rouge qui élimine les composants de l'infra-rouge proche, auxquelles les jumelles à intensification de lumière sont très sensibles,
- existence d'une hystérésis dans le cycle d'éclairement, c'est-à-dire que pour une position de réglage donnée, l'intensité émise n'est pas la même selon que le réglage a été réalisé en augmentant ou en diminuant l'intensité.

Selon l'invention, au moins certains des inconvénients précités sont évités grâce à un dispositif d'éclairage ultra-violet d'une zone dont au moins une région présente un marquage fluorescent, caractérisé en ce qu'il comporte une pluralité de diodes électro-luminescentes émettant dans l'ultra-violet proche et au moins un élément optique assurant une dispersion de la lumière émise par les diodes pour assurer un éclairage de ladite zone.

Les diodes pouvant être disposées en ligne ou bien en réseau à deux dimensions.

Au moins un dit élément optique assurant la dispersion de la lumière peut être au moins un prisme ou bien une lentille de Fresnel.

Les diodes du dispositifs d'éclairage peuvent être réparties en au moins deux groupes alimentés séparément, ou bien être alimentées individuellement et séparément, ce qui permet d'assurer une redondance en cas de panne.

L'invention concerne également un cockpit d'aéronef, en particulier d'hélicoptère, qui comporte au moins un dispositif d'éclairage tel que défini ci-dessus.

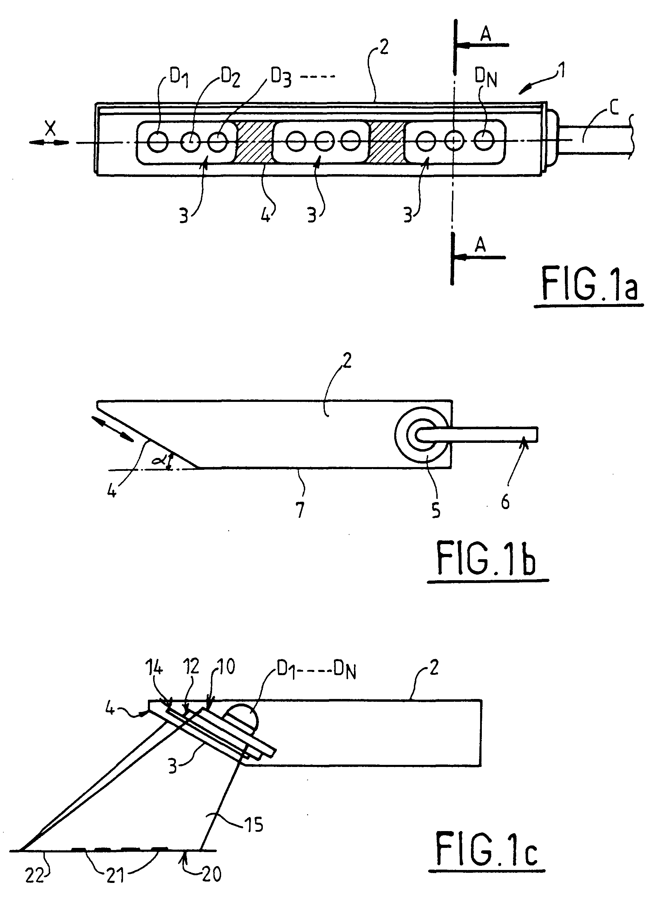

D'autres caractéristiques et avantages de l'invention apparaîtront mieux à la lecture de la description qui va suivre donnée à titre d'exemple non limitatif, en liaison avec les dessins annexés, dans lesquels les figures 1a à 1c représentent respectivement en vue de face, en vue latérale et en coupe AA, un dispositif selon un mode de réalisation préféré de l'invention.

Comme le montrent les figures, un dispositif d'éclairage 1 présente N diodes D1,D2,...,DN alignées dans un boîtier 2 et émettant à travers une ou plusieurs fenêtres 3 ménagées dans une face inclinée 4 formant un angle α avec une face 7 du boîtier 2. Les diodes D1,D2,...,DN sont alimentées par un câble C. Le boîtier 2 est monté sur un support 6 par l'intermédiaire d'une liaison 5 assurant par exemple l'orientabilité du boîtier. Dans l'exemple représenté, les diodes sont au nombre de 9 et ont été réparties en ligne dans trois fenêtres adjacentes 3. Il va de soi que les diodes pourraient être en nombre différent et/ou être disposées en réseau à deux dimensions s'inscrivant dans un contour par exemple carré, rectangulaire ou circulaire.

Ces diodes sont monochromatiques avec une fréquence d'émission comprise entre 320nm et 400nm, et par exemple sensiblement égale à 370nm.

Un avantage de ces diodes est tout d'abord une meilleure résistance sur le plan mécanique et une durée de vie nettement plus élevée que les tubes fluorescents.

Un autre avantage est la suppression d'une alimentation en haute tension nécessitant la mise en oeuvre d'un convertisseur.

Un autre avantage est l'absence ou la quasi-absence d'hystérésis. En effet, le flux lumineux émis par les diodes est directement proportionnel au courant les traversant, et de plus la courbe représentant le flux lumineux en fonction du courant est quasiment une droite.

Les diodes D1,D2,...,DN émettent un flux lumineux selon un champ relativement étroit (± 5°) qui est élargi selon la direction X et/ou Y par un élément optique dispersif 10 tel qu'un ou plusieurs prismes ou une lentille de Fresnel, disposé(s) en face de chaque diode, ou bien en face des diodes d'un groupe de diodes. Les prismes peuvent être réalisés par exemple sous forme de plaque extrudée, usinée ou moulée.

Il existe également des films microgravés, notamment par holographie, qui présentent une fonction de diffuseur.

Le faisceau lumineux émergent 15 ainsi élargi est susceptible d'éclairer de manière adaptée une zone 22 d'un support 20, par exemple un afficheur de cockpit d'hélicoptère, qui présente des marquages fluorescents 21 qui deviennent visibles lorsqu'ils sont éclairés par le faisceau 15. Ceci constitue un avantage supplémentaire de l'invention, car il est possible d'adapter le dispositif à la zone 22 à éclairer en élargissant plus ou moins le champ à l'aide du ou des éléments 10.

En outre, on remarquera qu'un élément dispersant tel qu'un prisme, un réseau de prismes ou une lentille de Fresnel n'introduit que des pertes négligeables.

Du fait qu'elles sont monochromatiques avec un spectre d'émission étroit, les diodes utilisées permettent en général d'éviter la mise en oeuvre d'un filtre infra-rouge.

Selon les propriétés des diodes choisies, on disposera ou non un verre de Wood 12 de manière à couper les composantes visibles. En tout état de cause, même dans le cas de la mise en oeuvre d'un verre de Wood 12, celui-ci sera généralement moins épais que dans le cas d'un tube fluorescent.

II en résulte que dans la plupart des cas, on pourra minimiser les pertes de rendement, un verre de Wood procurant une atténuation qui en pratique est au minimum égale à 10 %.

On pourra disposer un verre 14 de protection mécanique qui occupe le contour de la ou des fenêtre(s) 3.

Il est possible d'améliorer le comportement vis-à-vis des pannes en répartissant les diodes en groupes de diodes qui sont alimentées séparément. Il est également possible de prévoir une alimentation individuelle et indépendante des diodes. Ainsi, la panne d'un dispositif d'alimentation électrique ou d'une diode permettra un fonctionnement dégradé avec une intensité lumineuse abaissée, par exemple de 30 % dans le cas des 3 groupes de diodes, qui peut être au moins en partie récupéré en jouant sur l'intensité d'émission des autres diodes, ce qui permet de terminer une mission dans de bonnes conditions. Avec les éclairages à tubes fluorescents de l'art antérieur, la panne d'un des tubes entraînait le non-éclairement de la zone correspondante et une perte gênante d'information.

L'invention permet donc d'apporter des améliorations substantielles au niveau de la simplification de l'installation, de son utilisation et de sa fiabilité.

## Revendications

1. Dispositif d'éclairage ultra-violet d'une zone (22) dont au moins une région présente un marquage fluorescent (21), le dispositif comportant une pluralité de diodes électro-luminescentes (D1,D2,...,DN) émettant dans l'ultra-violet proche caractérisé en ce qu'il comprend en outre au moins un élément optique (10) assurant une dispersion de la lumière émise par les diodes (D1,D2,...,DN) pour assurer un éclairage de ladite zone (22).

2. Dispositif selon la revendication 1, caractérisé en ce que les diodes (D1,D2,...,DN) sont disposées en ligne ou bien en réseau à deux dimensions.

3. Dispositif selon une des revendications 1 ou 2, caractérisé en ce qu'au moins un élément optique (10) est constitué par au moins un prisme ou bien par une lentille de Fresnel, ou bien un film microgravé.

4. Dispositif selon une des revendications 1 à 3, caractérisé en ce qu'il présente un filtre de Wood (12) placé en face des diodes.

5. Dispositif selon une des revendications précédentes, caractérisé en ce que les diodes (D1,D2,...,DN) sont réparties en au moins deux groupes alimentés séparément, ou bien sont alimentés individuellement et séparément.

6. Cockpit d'aéronef, en particulier d'hélicoptère, caractérisé en ce qu'il comporte au moins un dispositif d'éclairage selon une des revendications précédentes.
